# EUROPEAN PATENT SPECIFICATION

(11) **EP 0 808 706 B1**
(45) Date of publication and mention of the grant of the patent: **22.08.2001**
(21) Application number: 97302542.2
(22) Date of filing: 14.04.1997
(51) Int. Cl.: B29C 63/06, B65D 1/12

(54) **Method of manufacturing film-bonded can bodies**
Verfahren zum Herstellen von filmbeschichteten Dosenkörpern
Procédé de fabrication de corps de boites revêtus d'un film

(30) Priority: 26.04.1996 JP 13091696
(43) Date of publication of application: 26.11.1997
(73) Proprietor: DAIWA CAN COMPANY, Chuo-ku, Tokyo (JP)
(72) Inventor: Kuboshima, Akira, Sagamihara-shi, Kanagawa-ken, 229-11 (JP); Uematsu, Kenichi, Sagamihara-shi, Kanagawa-ken, 229-11 (JP); Yamaguchi, Masahiro, Sagamihara-shi, Kanagawa-ken, 229-11 (JP)
(74) Representative: Ben-Nathan, Laurence Albert

(56) References cited:
- EP-A- 0 521 606
- EP-A- 0 588 456
- GB-A- 2 265 568
- PATENT ABSTRACTS OF JAPAN vol. 095, no. 007, 31 August 1995 & JP 07 089552 A (HOKKAI CAN CO LTD), 4 April 1995, & JP 07 089 552 A (HOKKAI CAN CO LTD) 4 April 1995

## Description

### BACKGROUND OF THE INVENTION

### Field of the Invention

The present invention relates to a method of manufacturing a film-bonded can body by bonding a printed film sheet of a synthetic resin to the surface of the trunk of a metallic can body such that the both ends of the film sheet overlap each other, and by necking in and flanging the open side of the can body.

### Related Art

The two-piece can has its trunk and bottom formed integrally by drawing with ironing or repeatedly drawing a metal sheet. The two-piece can thus prepared is printed at its trunk with desired patterns or letters by a curved surface printer. Since, in this case, the printing operation is performed on the shaped metallic can trunk, the patterns or letters are printed not by the gravure printer, which is difficult to print the metal surface directly, but by the dry offset printer. After this printing operation, moreover, an overcoating layer is formed on that printed layer so as to protect it.

However, in the dry offset printer to be used for printing the two-piece can, a plurality of impression cylinders and inking units are arranged on one blanket cylinder. Moreover, different colors of ink are in principle applied to the blanket cylinder not so as to overlap each other, and the numbers of colors and tones of the print design are limited. It is, therefore, difficult for the dry offset printer to satisfy the more decorative appearance which is demanded by the various products according to the changes in the consumer's trends or needs.

In order to satisfy such demand, therefore, there have been proposed in the prior art a variety of techniques (e.g., JPA3-230940, JPA4-57747, JPA7-89552 and so on) in which the desired patterns or letters are applied to the trunk of a metallic can body not by printing the can trunk directly but by applying a decorative film sheet having a printed body of a thermoplastic resin such as polyester to the trunk of the can body.

For such film-bonded can body, more specifically, not only the offset printing method but also another method such as the gravure printing method can be suitably selected for the film sheet body of a thermoplastic resin. Therefore, the gravure printing of patterns and/or letters makes it possible to raise the degree of freedom for the numbers of colors and tones as compared with the direct print on the can trunk by using the dry offset printer, so that a more decorative appearance can be achieved. Moreover, the individual can bodies are not printed, but the continuous film of the thermoplastic resin is successively printed for the numerous can bodies so that a higher printing rate can be expected.

In most cases of the film-bonded can body manufacturing method of the prior art, the printed film sheet is so bonded to the trunk of the can body that the both ends of the film sheet overlap each other, as disclosed in the above-cited publications, too.

Incidentally, JPA7-89552 has disclosed that the film sheet is bonded with the both ends abutting against each other, but this disclosure is not practical. This is because it is practically difficult in accuracy to ensure no clearance in the abutment at all times when the film sheet is to be bonded to the trunk of the can body, so that the clearance is left between the both ends of the bonded film sheet. As a result, the printed pattern is broken at that clearance to provide an unattractive appearance. Still the worse, the metal body is naked at that portion to cause disadvantages that the naked portion rusts and that the abutting ends of the film sheet are floated at a sterilizing step to cause the separation.

Incidentally, the can body is further necked in and flanged at its open side after the film sheet was bonded thereto. As a result, the film-bonded can body of the prior art, the both ends of which are bonded to overlap each other, is troubled by the problems of wrinkles or separation of the film, if the adhesion at the overlapping portion is sufficient, when it is necked in and flanged.

As also disclosed in the foregoing JPA3-230940 or JPA4-57747, on the other hand, it is preferable to protecting the printed layer to form the overcoating layer on the printed layer. As disclosed in JPA7-89552, however, the overcoating layer is rather thought to be essential, even when the printed layer is formed on the inner side of the film sheet body (or the thermoplastic resin film) so that it need not be protected when bonded to the can body.

Without the overcoating layer, more specifically, the slippage of the outer face of the can body is deteriorated by the bonded film so that the transferability of the can body at the subsequent canning step or at the packing step to lower the canning or packing efficiency. Other problems are that the surface of the film being transferred will be easily damaged, and that during the heating sterilization at the packing step, the film will thermally shrink or precipitate oligomers on its surface to lessen the printing effect.

When the overcoating layer is formed in advance on the surface of the film sheet body, before bonded, so as to improve the slippage of the outer surface of the can body, the adhesiveness of the overlapping portion at the both ends of the film sheet is deteriorated by the lubricant such as silicone or wax contained in the overcoating layer, so that the overlapping portion becomes liable to separate thereby to invite the aforementioned problem that the wrinkle or separation of the film is caused at the subsequent can body deforming time.

As to the provision of the film sheet with the overcoating layer, the foregoing JPA4-57747 has disclosed that the overcoating layer can be omitted when the printed layer has a wear resistance or when the printed layer is formed on the inner side of the film sheet body (or the thermoplastic resin film) so that it is protected by the film sheet body. Also disclosed is that when the printed layer is formed on the outer side of the film sheet body so that it is protected by the overcoating layer, it is preferable for adhering the film ends at the overlapping portion that neither the printed layer nor the overcoating layer is formed in the portion which is located at the faces of the film to be adhered.

According to the technique as disclosed in this citation, more specifically, in order to adhere the both ends of the film sheet sufficiently when the printed layer is formed on the outer side of the film of the thermoplastic resin so that it may be protected by the overcoating layer, neither the printed layer nor the overcoating layer is formed in the lower layer side (to be adhered) of the overlapping portion so that the adhesive layer on the lower face of the upper layer side of the overlapping portion may be adhered to the lower layer side of the overlapping portion not through the printed layer and the overcoating layer.

However, when the printed continuous film of a resin is cut, while being clamped and fed to run at a high speed (e.g., 100 m/min. or more), by a feed roller turning at a high speed so that the individual cut film sheets are successively fed to the individual can bodies, the continuous film may slightly elongate during its run to deviate its cutting position. When the continuous film, in which the overcoating layer is not formed only the portion corresponding to the lower layer side of the overlapping portion, i.e., the film lap width, is cut into the film sheets having a size for one can so that the film sheets are bonded to the can bodies, it is practically impossible to overlap the portion having no overcoating layer in each film sheet always accurately with the lower layer side of the overlapping portion.

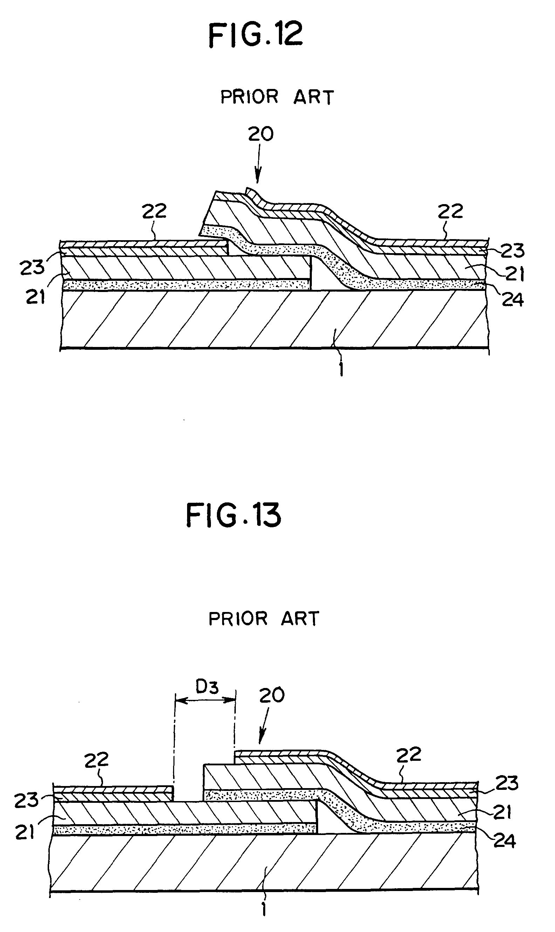

If the actual cutting position of the continuous film 3 goes out of the set position, as shown in Fig. 12, for example, an overcoating layer 22 will go below an overlapping portion 20 when a cut film sheet 2 is to be boned to a can body 1. As a result, the overcoating layer 22 is present at the outer end portion, to be adhered, of the overlapping portion 20, i.e., below the outer end portion of the upper layer side of the film sheet 2 so that the adhesion of that portion is so insufficient as to cause a problem that the overlapping portion 20 is liable to separate at that portion.

Incidentally, the metal can trunk manufacturing method of the foregoing citation (i.e., JPA4-57747) having disclosed that no overcoating layer is formed on the lower layer side of the overlapping portion is characterized in that the overlapping portion having the film bonded thereto is thinned (to 1.6 times or less as that of other portions) by extending in advance such a portion of the continuous film of a resin as to provide the overlapping portion. For this elongation, the run of the continuous film is once stopped, so that the printed film cannot be successively bonded at a high rate to the can body.

JPA7-89552 discloses a method of manufacturing a film-bonded can body in accordance with the preamble of Claim 1.

### SUMMARY OF THE INVENTION

A main object of the present invention is to provide a method of manufacturing a can body by bonding a printed film sheet having an overcoating layer on its surface to the can trunk, which method retains the adhesiveness of an overlapping portion by leaving no overcoating layer at the faces of the overlapping portion to be adhered, even when a continuous film of a synthetic resin having the overcoating layer and a printed layer formed continuously while being run at a high speed is cut into film sheets having a size for each can so that the film sheets are successively fed to the individual can bodies.

According to the present invention, there is provided a method of manufacturing a can body in accordance with Claim 1.

This location leaves no overcoating layer on the surface at the end of the lower layer side of the film sheet cut to the length of one can when the film sheet wraps around the can trunk. As a result, no obstruction occurs to the adhesion between the ends of the film sheet at the overlapping portion. Thus, even when the open side of the can body is to be deformed or necked in, the film sheet will not separate to provide a can having an attractive appearance.

The above and further objects and novel features of the present invention will more fully appear from the following detailed description when the same is read with reference to the accompanying drawings. It is expressly understood, however, that the drawings are presented for the purpose of illustration only and are not intended as a definition of the limits of the invention.

### BRIEF DESCRIPTION OF THE DRAWINGS

Fig. 1(A) is a side elevation showing a film- bonded can body to be manufactured by a method of the present invention, before it is necked in;
Fig. 1(B) is a side elevation showing the film- bonded can body to be manufactured by the method of the present invention, after it was necked in;
Fig. 2 is a section showing a laminated structure of a film sheet to be used in the film-bonded can body manufacturing method of the present invention;
Fig. 3 is a flow chart showing the essential steps in the film-bonded can body manufacturing method of the present invention;
Fig. 4 is a schematic diagram for explaining one example of a film bonding apparatus to be used in the film-bonded can body manufacturing method of the present invention;
Fig. 5 is a section showing a portion, where no overcoating layer is present, of a continuous film in the film-bonded can body manufacturing method of the present invention and a cutting setting position in the portion;
Fig. 6 is a longitudinal section showing a temporarily bonded state of the film sheet overlapping portion of the film-bonded can body to be manufactured by the manufacture method of the present invention;
Fig. 7 is a section showing a normally bonded state of the film sheet overlapping portion of the film-bonded can body to be manufactured by the manufacture method of the present invention;
Fig. 8 is a section showing one example of the case in which the cutting position of the continuous film at the film sheet overlapping portion shown in Fig. 7 gets out of position;
Fig. 9 is a section showing another example of the case in which the cutting portion of the continuous film at the film sheet overlapping portion shown in Fig. 7 gets out of position;
Fig. 10 is a top plan view showing one example of the continuous film in the film-bonded can body manufacturing method of the present invention;
Fig. 11 is a top plan view showing another example of the continuous film in the film-bonded can body manufacturing method of the present invention;
Fig. 12 is a section showing the film sheet overlapping portion of a film-bonded can body to be manufactured by a manufacture method of the prior art; and
Fig. 13 is a section showing the film sheet overlapping portion of the film-bonded can body to be manufactured by a comparison example based on the example of the prior art shown in Fig. 12.

### DESCRIPTION OF THE PREFERRED EMBODIMENT

Here will be described in detail an embodiment of the method of manufacturing a film-bonded can body according to the present invention with reference to the accompanying drawings.

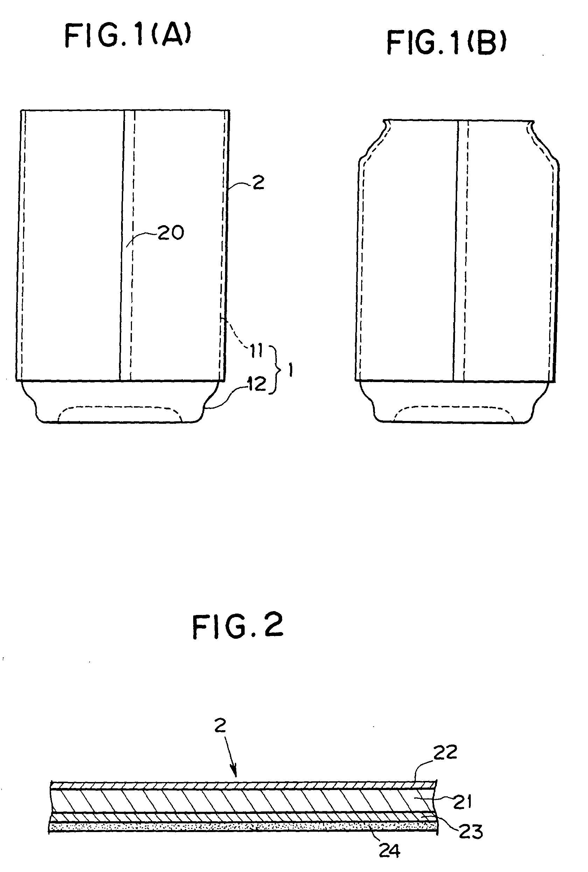

Figs. 1(A) and 1(B) show the film-bonded can body to be manufactured by the manufacture method of the present invention before and after the can body is worked. Before a metallic can body 1 having a cylindrical can trunk 11 and a can bottom 12 formed integrally therewith is necked in or flanged, as shown in Fig. 1(A), a printed film sheet 2 is heat-bonded to the can trunk 11. Next, the open side of the can body 1 having the bonded film sheet 2 is necked in and flanged, as shown in Fig. 1(B).

In the present embodiment, the can body 1 is drawn with ironing from a metal disc of aluminum or steel into a two-piece can having the cylindrical can trunk 11 and the can bottom 12. Alternatively, the can body 1 may be impacted or repeatedly drawn (or drawn and stretched) into the two-piece can. The can body 1 should not be limited to them but may be exemplified by a three-piece can which is prepared by bending and welding or bonding a metal sheet of a surface treated steel sheet such as a tin-free steel sheet, or another sheet material such as a tinned iron sheet, a chromium plated steel plate or a nickel plated steel sheet into a cylinder and by winding one open end onto a bottom cover to clamp it into an integral structure.

The film sheet 2 to be bonded to the trunk 11 of the can body 1 is formed mainly of a thermoplastic resin 21. An overcoating layer 22 of a thermoset resin containing a lubricant is formed on one face (as located to provide the surface when the film sheet 2 is bonded to the can trunk 11) of the thermoplastic resin film 21. A printed layer 23 and an adhesive layer 24 are sequentially formed on the other face (as located to provide the back when the film sheet 2 is bonded to the can trunk 11) of the thermoplastic resin film 21.

The thermoplastic resin film 21 forming the body of the film sheet 2 is specified by a thermoplastic resin film which is made of: a transparent high-molecular resin monomer selected from a polyester resin such as polyethylene terephthalate resin or polybutylene terephthalate resin, a polyester resin copolymer of polyethylene terephthalate and isophthalic acid, a polypropylene resin, a polycarbonate resin, a polystyrene resin, a vinyl chloride resin, and a polychloride vinylidene coplymer; or a composite of the above-specified resins. The thickness of this thermoplastic resin film 21 is suitably decided according to a difference in the material.

Incidentally, this thermoplastic resin film 21 may preferably be exemplified by a slightly extensible and heat resisting polyethylene terephthalate resin, because it is pressed, at a normally bonding step of the manufacture method of the present embodiment when the film sheet 2 is bonded to the can trunk 11 of the heated can body 1, circumferentially of the can trunk 11 under a linear pressure of about 60 Kgf/cm. The thermoplastic resin film 21 of that resin may preferably have a thickness of about 10 to 30 *µ*m.

The overcoating layer 22, as formed on the one side (i.e., the surface) of the thermoplastic resin film 21, is prepared by blending a thermoset resin such as an epoxy-amino resin, an epoxy-melamine resin or a polyester-amino resin with 0.1 to 3.0 wt. % of a lubricant such as silicone or wax and is applied to have a thickness of about 1 *µ*m.

The printed layer 23, as formed on the other side (i.e., the back) of the thermoplastic resin film 21, is made of the ink of a thermoset urethane resin. The printing method can be suitably selected from a variety of printing methods including the gravure method, the flexographic printing method and the offset printing method. When beautiful letters or patterns of rich color tones are to be printed by using many colors, the printed layer 23 may be formed by the gravure method.

The adhesive layer 24 covering the printed layer 23 has been formed of an adhesive of such a thermoset resin as is easily bonded thereto when heated and pressed and as has a satisfactory adhesiveness to the ink used in the printed layer 23. Especially in order that the adhesive layer 24 may be squeezed out into a step cavity 26, as formed in the inner end of an overlapping portion 20 of the film sheet 2 at a temporarily bonding step, at the normal bonding step under pressure of the manufacture method of the present embodiment, there may preferably be employed a thermoset adhesive having an excellent fluidicity of a glass transition temperature (Tg) of -10 to +40 degrees centigrade such as an adhesive containing a polyester resin blended with an epoxy resin and an amino resin.

This adhesive layer 24 may preferably be applied on the whole face of the thermoplastic resin film 21 including the printed layer 23 and is applied in at least 50 mg/dm², more preferably about 90 to 110 mg/dm², to the whole face when the aforementioned adhesive layer is employed.

The film sheet 2, as made of the above-specified individual materials, is exemplified by forming a thermoset overcoating layer 22 having a thickness of 1 *µ*m and composed of an epoxy resin (containing 0.05 wt. % of silicone and 2.0 wt. % of wax) on one face of the polyethylene terephthalate resin film 21 having a thickness of 12 *µ*m, and by forming on the other face both the printed layer 23 having a thickness of 3 *µ*m and printed in the gravure with the ink of a urethane resin and the thermoset adhesive layer 24 having a thickness of 5 *µ*m and composed of a polyester resin blended, an isocyanate resin and an amino resin (at a blending ratio of 94 : 3 : 3).

The film sheet 2 thus prepared is made at its two ends to overlap each other and is thermally adhered through the adhesive layer 24 to the cylindrical can trunk 11 of the metallic can body 1 having the integrated can bottom 12, as shown in Fig. 1(A).

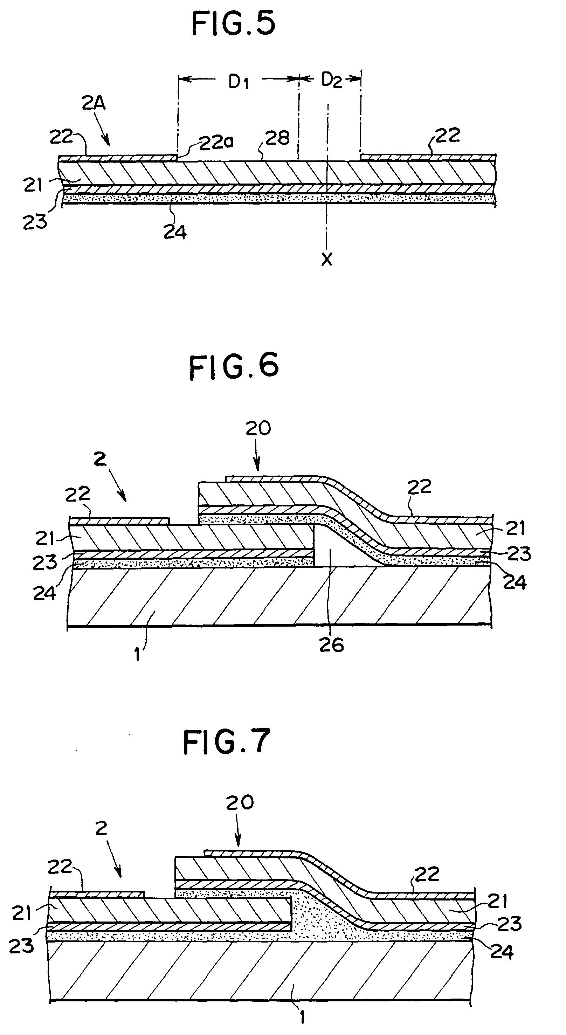

In this case, at the two ends of the film sheet 2, as shown in Fig. 7, no overcoating layer 22 is normally present on the lower layer side (to be adhered) of the overlapping portion 20. On the other hand, the adhesive layer 24 on the lower face (of the upper layer side of the film sheet) is bonded directly to the thermoplastic resin film 21 of the lower layer side. Moreover, the overcoating layer 22 is partially absent from the upper face of the upper layer side of the overlapping portion 20.

Here will be described the method of manufacturing the film-bonded can body of the present embodiment, in which the overlapping portion 20 of the both ends of the film sheet 2 to be bonded to the can trunk 11 of the can body 1 is set, as described above.

In order to form the printed film sheet 2 to be bonded to the can body 1, in the present embodiment, the thermoplastic resin film 21 is let off and run from its coiled roll. Specifically, the thermoplastic resin film 21 is successively fed out sequentially by an applicator roller (having a grooved portion in its outer circumference for forming an unapplied portion) for forming the overcoating layer 22, a printing roller for forming the printed layer 23 and an applicator roller for forming the adhesive layer 24, and is run at a speed as high as 100 to 15 m/min. by turning those rollers fast.

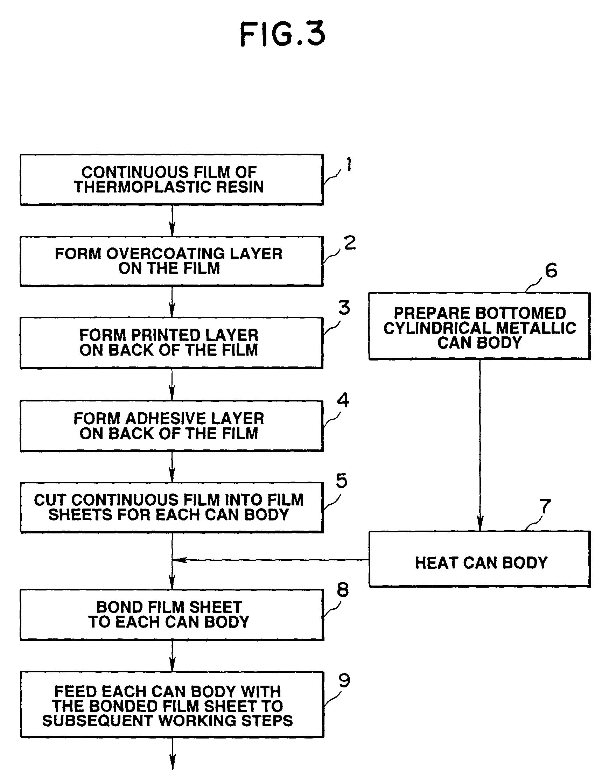

As a result, as shown in the flow chart of Fig. 3, the overcoating layer 22 is successively formed by applying an overcoating resin to the continuous film being run, by applicator means such as a gravure type coater such that a wide coated portion and a narrow linear uncoated portion may be formed on one face (or the surface) of the continuous film, and by heating and drying the continuous film. Next, the printed layer 23 is successively and repeatedly formed on the other face (or the back) of the continuous film being run, by printing means such as the gravure printing machine. Then, an adhesive is applied on the whole surface of the printed layer 23 to form the adhesive layer 24 successively, until the continuous film thus prepared is taken up on the roll after the printed layer 23 and the adhesive layer 24 are heated and dried up.

Next, the continuous film thus rolled up while having the overcoating layer 22 on one face of the thermoplastic resin film 21 and the printed layer 23 and the adhesive layer 24 on the other face is let off and run from the roll and is successively cut into the film sheets 2 each having a width larger, as taken in the transverse direction (with respect to the printed letters or ornamental patterns), than the circumferential length of the can trunk of the can body 1. Thus, a number of film sheets 2, as sized to be bonded to the can body 1, are successively fed to the film bonding apparatus.

In this film bonding apparatus, moreover, the film sheets 2 thus successively fed are temporarily bonded by the adhesive layer 24 to the individual can trunks 11 of the bottomed cylindrical metallic can bodies 1 being successively fed while being heated. Before the adhesive layer 24 is solidified, the film sheets 2 are normally bonded by the pressure of a press roll to prepare the film-bonded can bodies having the bottomed cylindrical shape. After this, these film-bonded can bodies are sent out to the subsequent working steps including an inside coating step and a necking-in step.

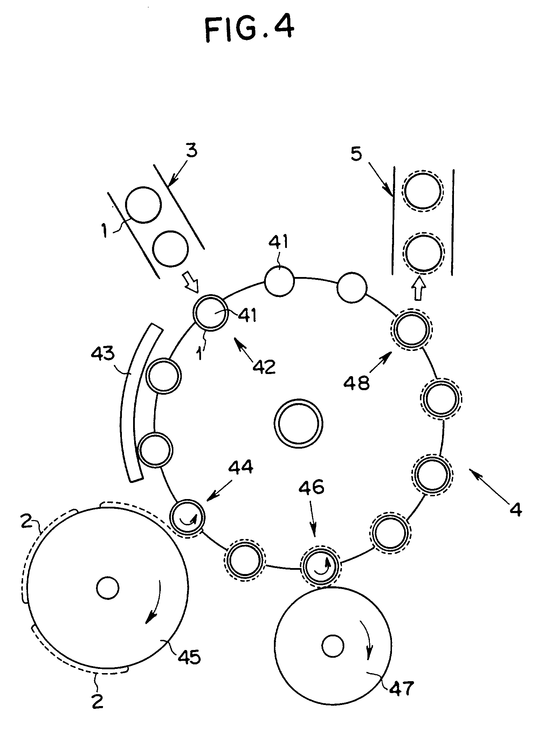

Fig. 4 schematically shows the film bonding apparatus 4 for bonding the film sheets 2, which has been cut into the size to be individually bonded to the can bodies 1 and fed, successively to the trunks 11 of the individual can bodies 1. In this apparatus 4, a number of mandrels 41 are arranged to move on a circle having a predetermined radius while keeping a predetermined interval inbetween. The mandrels 41 are made of cylindrical members having a slightly smaller diameter than the internal diameter of the trunks 11 of their objective can bodies 1 and can turn on their individual center axes.

In a predetermined position of the passage for the individual mandrels 41 to move thereon, there is provided a can feed station 42, to which is connected a conveyor 3 for conveying a series of can bodies successively. The metallic can bodies 1, as carried by the conveyor 3 to the feed station 42, are pushed towards the mandrels 41 at their bottoms 12 by the push means and the suction means (although neither of them are shown) so that they are fitted for the subsequent transfer on the individual mandrels 41.

Ahead of the moving direction of the mandrels 41 downstream of the feed station 42, there is arranged a heater 43 such as a radio-frequency induction heater, which is located over a predetermined range around the moving passage of the mandrels 41. Moreover, these mandrels 41 are constructed to turn on their axes while moving within that range. As a result, while the mandrels 41 are moving in the range, the can bodies 1 being held by the mandrels 41 are so heated by the heater 43 that their trunks 11 may be homogeneously heated as a whole to about 150 to 160 degrees centigrade.

Ahead of the moving direction of the mandrels 41 downstream of the heater 43, there is arranged a temporary bonding station 44. In this temporary bonding station 44, there is arranged an applicator roll 45 for applying the film sheets 2 successively to the surfaces of the trunks 11 of the individual can bodies 1. The applicator roll 45 successively receives the film sheets 2 having the size for each of the cans being fed and applies the received film sheets 2 successively to the individual can bodies 1.

The applicator roll 45 turns on its axis in synchronism with the movement of the mandrels 41. This applicator roll 45 successively sucks, while turning on its axis, the individual film sheets 2, as cut to the size for each can and successively fed, with the individual adhesive layers 24 being directed to the outside, and holds them at a predetermined interval on its outer circumference. Moreover, the applicator roll 45 successively feeds the film sheets 2, as sucked and held on its outer circumference, at a rate as high as about 100 m/min. to the individual can bodies 1 being fed, and successively bonds them under a linear pressure of about 30 Kgf/cm to the surfaces of the trunks 11 of the individual can bodies through the individual adhesive layers 24.

Incidentally, the application pressure of the applicator roll 45 can be suitably changed by adjusting the gap between the applicator roll 45 and the mandrels 41. As the film sheet sucking and holding means, on the other hand, there can be adopted a variety of means known in the art such as the vacuum suction or the electrostatic suction.

Ahead of the moving direction of the mandrels 41 downstream of the temporary bonding station 44, there is arranged a normal bonding station 46 for firmly bonding the film sheets 2 which have been bonded to the can trunks 11 at the temporary bonding station 44. Around the moving passage of the mandrels 41 at this normal bonding station 46, there is arranged a press roll 47 for pressing the surfaces of the can trunks 11 having the film sheets 2 bonded thereto.

The press roll 47 is arranged so close to the temporary bonding station 44 that the can bodies 1 having been heated by the heater 43 may not cool down to a temperature at which the adhesive layers 24 of the film sheets 2 to solidify. The press roll 47 is forced to push the mandrels 41. This forcing pressure is set to a level 1.5 to 2 times as high as that at the temporary bonding station, such as a linear pressure of about 60 Kgf/cm or at least a linear pressure of 40 Kgf/cm or more.

Around the can body 1 having the film sheet 2 bonded thereto at the temporary bonding station 44, as shown in Fig. 6, the step cavity 26 depending upon the thickness of the film sheet 2 is formed at the inner end of the overlapping portion 20 of the film sheet 2. By pressing the can trunk surface with the aforementioned press roll 47 while rotating the can body 1 on its axis, however, the adhesive layer 24 is squeezed out to fill up the step cavity 26, as shown in Fig. 7, to establish the normal bond.

Ahead of the moving direction of the mandrels 41 downstream of the normal bonding station 46, there is arranged a can body discharge station 48 which is located in a predetermined position up to the can body feed station 42. To this discharge station 48, there is connected a conveyor 5 for conveying the can bodies 1 in series. At this discharge station 48, the can bodies 1 having the films bonded thereto are extracted from the mandrels 41 and sent out to the conveyor 5 by the well-known pneumatic discharge means until they are sent through a step of painting their insides to the necking-in step and the flanging step.

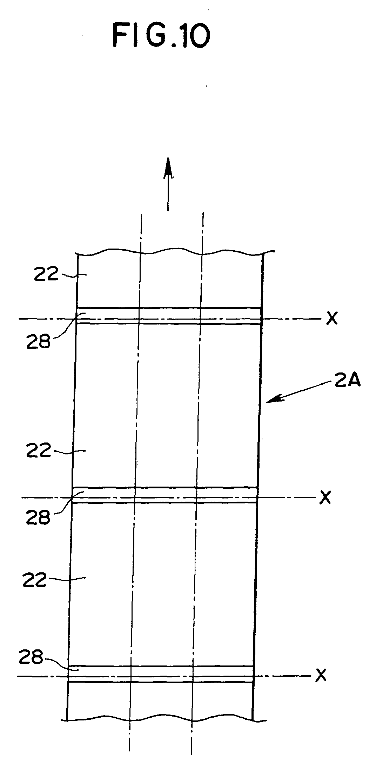

According to the method of manufacturing the film-bonded can body of the present embodiment, the film sheets 2 are successively fed and bonded by the aforementioned film bonding apparatus 4 to the individual metallic can bodies 1 being successively fed. In this manufacture method, the individual film sheets 2, as successively fed to the applicator roll 45 of the film bonding apparatus 4, are prepared, for example, by cutting the printed continuous film 2A already having the overcoating layer 22, successively into sheets for the individual cans (as indicated by single-dotted lines), as shown in Fig. 10.

When the overcoating layer 22 is to be formed on the continuous film 2A, the overcoating resin is not applied to the whole surface of the continuous film in accordance with the manufacture method of the present invention. Specifically, as shown in Fig. 10, the portions having no overcoating layer 22 (that is, non-overcoated portions 28 where the thermoplastic resin film 21 is exposed to the surface) are formed to have a larger width than that (i.e., one half of the width of the predetermined portions) of the overlapping portions 20 in the portions which are overlapped to provide the two ends of each film sheet 2 forming the overlapping portion 20 when the cut film sheets 2 are bonded to the can trunks 11.

Incidentally, in order to form the non-overcoated portions 28, as shown in Fig. 10, there is used the applicator roller which is provided at a predetermined interval with grooved portions having the width of the non-over coated portions 28 and parallel with the roller axis in the outer circumference of the roller.

Moreover, the continuous film 2A is set to the cutting positions for providing the film sheets 2 of the size for each can, in its portions (i.e., the non-overcoated portions 28), where the overcoating layer 22 is absent. In the cutting positions, as shown in Figs. 6 and 7, the overcoating layer 22 is not present in the least on the lower layer side of the overlapping portion 20 and at least partially on the upper layer side of the overlapping portion 20 when the cut film sheet 2 is bonded to the surface of the can trunk.

Specifically, as shown in Fig. 5, the width (i.e., the length of the continuous film 2A in the running direction) of the portions (i.e., the non- overcoated portions 28) in the absence of the overcoating layer 22 of the continuous film 2A is set to the sum of the width D₁ of the overlapping portion 20 and the maximum width D₂ of the dispersion of the actual cutting positions, as estimated. And, the cutting position X of the continuous film 2A is preset in the position which is spaced by the summed width (D₁ + D₂/2) of the width D₁ of the overlapping portion 20 and one half of the width D₂ of the dispersion of the estimated actual cutting position, from the end 22a of the overcoating layer 22 at the lower layer side of the overlapping portion 20.

The relative size of the width of the portion having no overcoating layer 22 to the width of the overlapping portion 20 and the cutting portion of the portion having no overcoating layer 22 are determined by adding a safety factor to the maximum width of the dispersion of the actual cutting position which is determined in advance by experiments. Alternatively, the cutting position X may be suitably selected and determined from the chart of the experimental values which are prepared according to the conditions of the feed speeds of the continuous film, the kinds of the film resin and the ambient temperatures. In either even, the width of the portion having no overcoating layer 22 has to be made the larger for the higher dispersion of the actual cutting position. In short, the dispersion of the cutting position in the present invention can be experimentally determined.

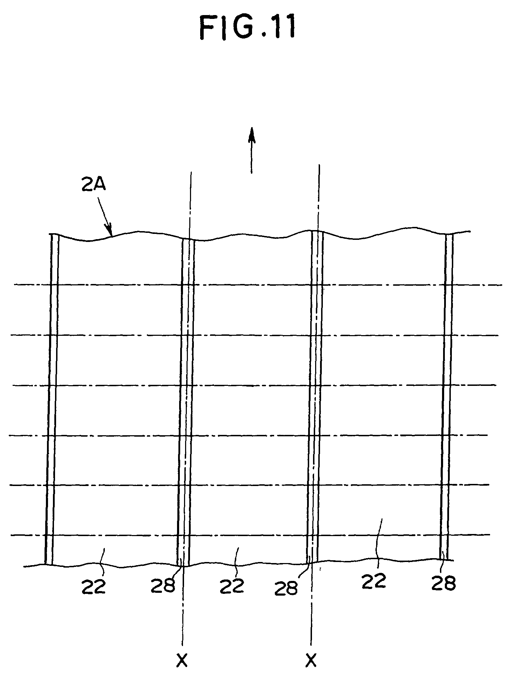

In the continuous film 2A of the present embodiment, as shown in Fig. 10, the portions (i.e., the non-overcoated portions 28) having no overcoating layer 22 are formed in the perpendicular direction with respect to the running direction (or the longitudinal direction) of the continuous film 2A. As shown in Fig. 11, however, the absent portions may be formed continuously in parallel with the running direction (or the longitudinal direction) of the continuous film 2A (in this case, the applicator roller to be used has the grooved portions formed in the roller outer circumference in the direction perpendicular to the roller axis). It is also arbitrary to change how many rows of film sheet 2 are to be defined in each continuous film 2A.

Here will be described the roll for applying the overcoating layer 22 to the thermoplastic resin film 21. The general roll to be used has the grooves formed in its outer circumference in the circumferential direction. If this roll is used, the non-overcoated portions 28 are formed in the running direction (as indicated by the arrow) of the continuous film 2A. If there is used the same gravure coat roll as that to be used for the gravure printing operation, there can be used not only the roll which has circumferential stripes in its outer circumference for forming the non-overcoated portions 28, as shown in Fig. 11, but also the roll which has axial spots. In the latter case, there are formed the non- overcoated portions 28 which are perpendicular to the running direction (as indicated by the arrow) of the continuous film 2A, as shown in Fig. 10.

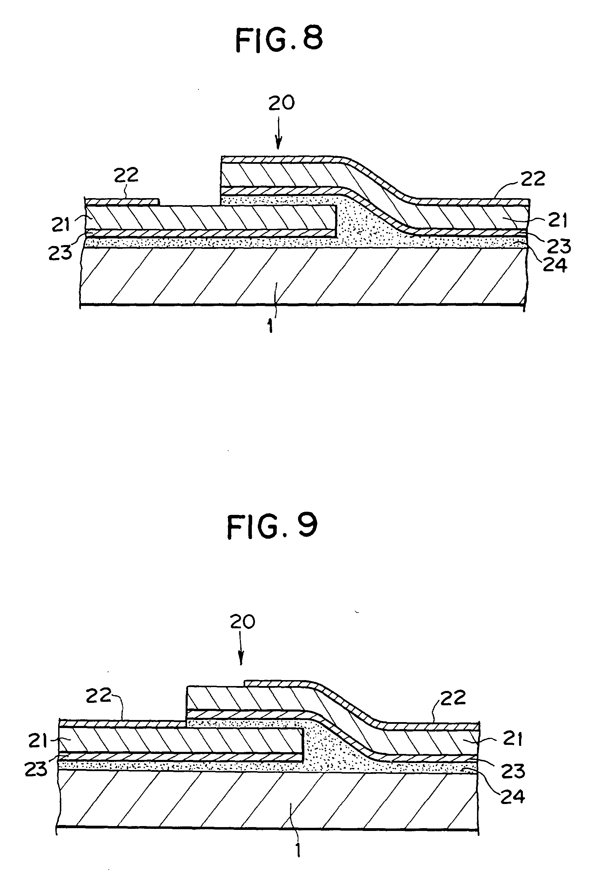

According to the method of manufacturing the film-bonded can body thus far described according to the present embodiment, the printed continuous film 2A running at a high speed is cut into the film sheets 2 having the size for each can, and these film sheets 2 are successively fed to the individual can bodies 1. Even if the continuous film 2A should so slightly elongate while running that the actual cutting position should get out of the cutting position X (as shown in Fig. 5), the overcoating layer 22 is not present on the lower layer side of the overlapping portion 20, as shown in Figs. 8 and 9, respectively, even when the cutting position X goes the most righthand (by D₂/2) and the most lefthand (by D₂/2) when the cut film sheet 2 is bonded to the can body 1. As a result, the adhesion of the overlapping portion 20 is ensured so much that the film sheet 2, as bonded to the can body 1, does not come out of the overlapping portion 20 when at the subsequent necking-in step or the flanging step.

According to the present embodiment, the discontinuous portion where the overcoating layer 22 is absent is formed with the dispersion width D₂ of the estimated actual cutting position at the upper layer side of the overlapping portion 20 and in the vicinity of the overlapping portion 20 in the trunk of the film-bonded can body. However, the discontinuous portion of the overcoating layer 22 is the necessary minimum for eliminating the overcoating layer 22 reliably from the lower layer side of the overlapping portion 20 and is made so small as to exert no influence, that is, as to raise no problem in the protection or slippage of the can trunk surface.

In the present embodiment, on the other hand, the small discontinuous portion is formed at the overcoating layer 22 in the circumferential direction of the trunk of the film-bonded can body but is not left in the least at the printed layer 23. As a result, it does not occur in the least that the printed pattern is even slightly cut midway of the can trunk to provide an unattractive appearance.

This point will be examined in connection with the structure in which neither the printed layer nor the overcoating layer is formed at the lower layer side of the overlapping portion, as disclosed in JPA4-57747, as cited hereinbefore. If, in this structure, the range having neither the printed layer nor the overcoating layer should be slightly widened as in the present invention while considering the deviation of the cutting position of the continuous film, a discontinuous portion D₃ would be left in the printed layer, as shown in Fig. 13, at the instant the film sheet 2 is bonded to the can body 1. The discontinuous portion D₃ would provide an unattractive appearance in which the printed pattern is cut midway of the can trunk.

From this discussion, it is apparent that the technical concept, as disclosed in JPA4-57747, has never conceived the portion having no overcoating layer by considering the deviation of the cutting position of the continuous film, as disclosed by the present invention.

In the present embodiment, on the other hand, the overcoating layer 22 contains the lubricant such as silicone or wax, the slippage of the outer face of the can body is improved to improve the transferability of the can body at the subsequent steps. At the same time, the overcoating layer 22 is made of a thermoset resin so that the film will not thermally shrink, when it is heated and sterilized at the canning step, but will be kept from any precipitation of oligomers on the surface and from any deterioration in the printing effect.

According to the present embodiment, moreover, the bonding of the film sheet 2 to the trunk surface of the heated can body 1 is performed at first by applying the film sheet 2 to the trunk surface by the adhesive layer 24 and by pressing the film sheet 2 by the press roll 47 to bond it normally before the adhesive layer 24 solidifies. As shown in Fig. 6, therefore, the step cavity 26 to be established at the inner end of the overlapping portion 20 in accordance with the thickness of the film sheet 2 is filled up with the adhesive, as squeezed out from the adhesive layer 24, as shown in Fig. 7. As a result, the bonding between the film sheet 2 and the can body 1 is effectively prevented from being weakened by the step cavity 26 at the overlapping portion 20.

The present invention has been described in connection with its one embodiment of the method of manufacturing the film-bonded can body but should not be limited to that embodiment. So long as the cutting position X of the continuous film 2A is set as in the present embodiment at the distance of the width (D₁ + D₂/2) of the sum of the width D₁ of the overlapping portion 20 and one half of the dispersion width D₂ of the cutting position from the end 22a of the overcoating layer 22, as located at the lower layer side of the overlapping portion 20, the present invention can be practiced even if the width of the portions (i.e., the non-overcoated portions 28), where the overcoating layer to be formed on the continuous film 2A is absent, is smaller than the summed width (D₁ + D₂) of the width D₁ of the overlapping portion and the dispersion width D₂ of the estimated actual cutting portion.

Even if the cutting position X in this modification should deviate rightward or leftward by the distance D₂/2 from the intended position, the overcoating layer 22 can be reliably prevented from going into the outer end (i.e., the lower layer side overlapping the end of the upper layer side), to be bonded, of the overlapping portion 20, thereby to prevent the separation of the end of the upper layer side of the overlapping portion 20 without fail.

When the actual cutting position deviates rightward over the non-overcoated portion, on the other hand, the overcoating layer 22 may slightly intrude into the vicinity of the inner end (i.e., the end of the lower layer side), to be bonded, of the overlapping portion 20, thereby to make the width of the non-overcoated portion 28 smaller than the sum of (D₁ + D₂). This intrusion may be D₂/2 at the maximum if the non-overcoated portion 28 has the minimum width of (D₁ + D₂/2). Then, the width of the bonded portion of the overlapping portion 20 may possibly be accordingly reduced. Despite of this possibility, however, this bonded portion is in contact over a wide range with the surface of the can trunk even if its width decreases. Moreover, there arises no substantial problem because the outer end of the upper layer side is sufficiently bonded to the face of the bonded portion of the overlapping portion 20 while having no metal surface exposed to the outside.

Here will be generally described the advantages to be obtained by the present invention. According to the film-bonded can body manufacturing method of the present invention, the continuous film of a synthetic resin, as having the overcoating layer and the printed layer formed while being successively run at a high speed, is cut into the film sheets having the size for each can. Even when the film sheets thus prepared are successively fed to the individual can bodies, the printed patterns can be prevented from interrupting midway of the can trunks to deteriorate their appearances. According to the method of the present invention, moreover, the overcoating layer is made absent from the faces, to be adhered, of the overlapping portion of the film sheet to be bonded to the can body so that the overlapping portion can retain its adhesiveness. As a result, the overlapping portion of the film, as bonded to the can body, can be prevented from wrinkling or separation at the subsequent necking-in step and flanging step.

## Claims

1. A method of manufacturing a film-bonded can body (1), which is manufactured by cutting a continuous film (2A) of a synthetic resin into a plurality of printed film sheets (2) having a size for each can (1) and by thermally bonding the film sheet (2) to the trunk (11) of each cylindrical metal can body (1), and providing an overcoating layer (22) on the film sheet (2) characterized by:
said film sheet (2) being bonded to the trunk (11) with its cut ends overlapping each other and without abutting against each other;
forming said overcoating layer (22) on said continuous film (2A) by forming a portion having no overcoating layer (22) in such an estimated overlapping portion of the continuous film (2A) as estimated to provide the two ends of the film sheet (2) forming the overlapping portion (20) when the cut film sheet (2) is bonded to the can trunk (11), with a width larger than the sum of the width of said overlapping portion (20) and one half of the dispersion width of an estimated actual cutting position (X); and
cutting in advance the estimated overlapping portion (20) of said continuous film (2A) by setting as the cutting position (X) of said continuous film (2A) the position which is spaced by the width of the sum of the width of the overlapping portion (20) and one half of the dispersion width of said estimated actual cutting position (X), from the end of the overcoating layer (22) which is formed on the film (2A) at the lower layer side of said overlapping portion (20) when the cut film sheet (2) is bonded to the can trunk (11).

2. A film-bonded can body (1) manufacturing method according to Claim 1,
wherein said overcoating layer (22) is made of a thermoplastic resin containing a lubricant.

3. A film-bonded can body manufacturing method according to Claim 2, further characterized by:
the step of applying said cut film sheet (2) to the surface of the trunk (11) of said can body (1), as heated; and
the step of pressing said film sheet (2) to the surface of the can trunk (11) by a roll (47) before the adhesive layer formed on said film sheet (2) solidifies.

4. A film-bonded can body manufacturing method according to Claim 3,
wherein said step of forming said overcoating layer (22) continuously includes the sub-step of preparing the portion having no overcoating layer (22) and the width of the sum of the estimated dispersion width of said cutting position (X) and the width of said overlapping portion (20), in said estimated overlapping portion.

5. A film-bonded can body (1) manufacturing method according to any preceding claim, further characterized by:
the step of applying said cut film sheet (2) to the surface of the trunk (11) of said can body (1), as heated; and
the step of pressing said film sheet (2) to the surface of the can trunk (11) by a roll (47) before the adhesive layer (24) formed on said film sheet (2) solidifies.

6. A film-bonded can body (1) manufacturing method according to any preceding claim, further characterized by the step of deforming said can body after said film is bonded to said can body.

7. A film-bonded can body (1) manufacturing method according to Claim 1,
wherein the width in which said overcoating layer (22) is absent is the sum of the estimated dispersion width of the cutting position (X) and the width of said overlapping portion (20).

## Patentansprüche

1. Verfahren zum Herstellen einer beschichteten Dose (1), die hergestellt wird durch
- Zuschneiden einer kontinuierlichen Folie (2A) aus Kunstharz in mehrere bedruckte Folienzuschnitte (2) mit einer einheitlichen Größe für jede Dose (1),
- thermisches Verkleben der Folienzuschnitte (2) mit dem Rumpf (11) jeder zylindrischen Metalldose (1), und
- Bilden einer Überzugsschicht (22) auf dem Folienzuschnitt (2),
dadurch gekennzeichnet, dass
- der Folienzuschnitt (2) mit dem Rumpf (11) so verbunden wird, daß sich seine Schnittkanten einander überlappen und nicht aneinanderstoßen,
- die Überzugsschicht (22) auf der kontinuierlichen Folie (2A) hergestellt wird durch Bilden eines Abschnitts ohne Überzugsschicht (22) in solch einem voraussichtlich überlappenden Abschnitt der kontinuierlichen Folie (2A), der voraussichtlich die zwei Enden der Folienzuschnitte (2) bildet, die den überlappenden Abschnitt (20) bilden, wenn der geschnittene Folienzuschnitt (2) mit dem Rumpf (11) der Dose verbunden ist, mit einer Breite größer als die Summe der Breite des überlappenden Abschnitts (20) und der Hälfte der Breitenstreuung einer voraussichtlich tatsächlichen Schneidposition (X), und
- zuvor der voraussichtlich überlappende Abschnitt (20) der kontinuierlichen Folie (2A) zugeschnitten wird durch Einstellen der Schneidposition (X) der kontinuierlichen Folie (2A) auf die Position (X), die um die Breite der Summe der Breite des überlappenden Abschnitts (20) und der Hälfte der Breitenstreuung der voraussichtlichen tatsächlichen Schneidposition (X) von dem Ende der Überzugsschicht (22) beabstandet ist, die auf der Schicht (2A) an der Unterseite der Schicht des überlappenden Abschnitts (20) gebildet ist, wenn der zugeschnittene Folienzuschnitt (2) mit dem Dosenrumpf (11) verbunden ist.

2. Verfahren zum Herstellen einer beschichteten Dose (1) nach Anspruch 1,
bei dem die Überzugsschicht (22) aus einem thermoplastischen Harz, welches ein Gleitmittel enthält, hergestellt ist.

3. Verfahren zum Herstellen von beschichteten Dosen nach Anspruch 2, weiterhin gekennzeichnet durch:
- den Schritt des Anbringens des zugeschnittenen Folienzuschnitts (2) an der Oberfläche des Rumpfes (11) der Dose (1), wenn sie erhitzt ist; und
- den Schritt des Pressens des Folienzuschnitts (2) auf die Oberfläche des Dosenrumpfes (11) mit einer Walze (47), bevor die Klebstoffschicht, die auf den Folienzuschnitt (2) aufgebracht ist, fest wird.

4. Verfahren zum Herstellen von beschichteten Dosen nach Anspruch 3, bei dem der Schritt des Bildens der Überzugsschicht (22) kontinuierlich den Neben-Schritt des Vorbereitens des Abschnitts ohne Überzugsschicht (22) und mit der Breite der Summe der voraussichtlichen Breitenstreuung der Schneidposition (X) und der Breite des überlappenden Abschnitts (20) in dem voraussichtlichen überlappenden Abschnitt umfasst.

5. Verfahren zum Herstellen von beschichteten Dosen nach einen der vorhergehenden Ansprüche, weiterhin aufweisend:
- den Schritt des Anbringens des zugeschnittenen Folienzuschnitts (2) an der Oberfläche des Rumpfes (11) der Dose (1), wenn er erhitzt ist; und
- den Schritt des Pressens des Folienzuschnitts (2) an die Oberfläche des Dosenrumpfes (11) durch eine Walze (47), bevor die Klebstoffschicht (24), die auf den Folienzuschnitt (2) aufgebracht ist, fest wird.

6. Verfahren zum Herstellen von beschichteten Dosen nach einen der vorhergehenden Ansprüche, weiterhin gekennzeichnet durch:
den Schritt des Verformens der Dose nachdem die Folie mit der Dose verbunden wurde.

7. Verfahren zum Herstellen von beschichteten Dosen nach Anspruch 1, bei dem die Breite, in der die Überzugsschicht (22) nicht vorhanden ist, die Summe der voraussichtlichen Breitenstreuung der Schneidposition (X) und die Breite des überlappenden Abschnitts (20) ist.

## Revendications

1. Procédé de fabrication d'un corps de boîte revêtu d'un film (1), qui est fabriqué en coupant un film continu (2A) d'une résine synthétique en une pluralité de feuilles de films imprimées (2), ayant une taille pour chaque boîte (1), et en liant par voie thermique la feuille de film (2) au tronc (11) de chaque corps de boîte métallique cylindrique (1), et en prévoyant une couche de finition (22) sur la feuille de film (2), caractérisé :
par la liaison de ladite feuille de film (2) au tronc (11), ses extrémités coupées étant superposées l'une sur l'autre et ceci sans contact frontal de l'une contre l'autre ;
par la formation d'une couche de finition (22) sur ledit film continu (2A) en formant une portion n'ayant pas de couche de finition (22) dans une portion de superposition estimée du film continu (2A), comme estimée pour fournir les deux extrémités de la feuille de film (2) formant la portion de superposition (20), quand la feuille de film coupée (2) est liée au tronc de la boîte (11), avec une largeur supérieure à la somme de la largeur de ladite portion de superposition (20) et d'une moitié de la largeur de dispersion d'une position de coupe effective estimée (X) ; et
par la coupe à l'avance de la portion de superposition estimée (20) dudit film continu (2A) en réglant, en tant que position de coupe (X) dudit film continu (2A), la position qui est écartée par un intervalle égal à la largeur de la somme de la largeur de la portion de superposition (20) et d'une moitié de la largeur de dispersion de ladite position de coupe effective estimée (X), de l'extrémité de la couche de finition (22) qui est formée sur le film (2A) à la face de couche inférieure de ladite portion de superposition (20), quand la feuille de film coupée (2) est liée au tronc de boîte (11).

2. Procédé de fabrication d'un corps de boîte (1) revêtu d'un film (1) , selon la revendication 1, caractérisé en ce que ladite couche de finition (22) est faite d'une résine thermoplastique contenant un lubrifiant.

3. Procédé de fabrication d'un corps de boîte revêtu d'un film selon la revendication 2, caractérisé par :
l'étape d'application de ladite feuille de film coupée (2) à la surface du tronc (11) dudit corps de boîte (1), après chauffage ; et
l'étape de compression de ladite feuille de film (2) sur la surface du tronc de boîte (11) à l'aide d'un rouleau (47), avant la solidification de la couche adhésive formée sur ladite feuille de film (2).

4. Procédé de fabrication d'un corps de boîte revêtu d'un film, selon la revendication 3, caractérisé en ce que ladite étape de formation de ladite couche de finition (22) comprend continuellement la sous-étape de préparation de la portion n'ayant aucune couche de finition (22) et la largeur de la somme de la largeur de dispersion estimée de ladite position de coupe (X) et la largeur de ladite portion de superposition (20), dans ladite portion de superposition estimée.

5. Procédé de fabrication d'un corps de boîte revêtu d'un film (1), selon l'une quelconque des revendications précédentes, caractérisé par :
l'étape d'application de ladite feuille de film coupée (2) sur la surface du tronc (11) dudit corps de boîte (1), après chauffage ; et
l'étape de compression de ladite feuille de film (2) sur la surface du tronc de boîte (11) à l'aide d'un rouleau (47), avant la solidification de la couche adhésive (24) formée sur ladite feuille de film (2).

6. Procédé de fabrication d'un corps de boîte revêtu d'un film (1), selon l'une quelconque des revendications précédentes, caractérisé en outre par l'étape de déformation dudit corps de boîte après liaison dudit film à ladite boîte.

7. Procédé de fabrication d'un corps de boîte revêtu d'un film (1), selon la revendication 1, caractérisé en ce que la largeur, dans laquelle ladite couche de finition (22) est absente, est la somme de la largeur de dispersion estimée de la position de coupe (X) et de la largeur de ladite portion de superposition (20).
